# EUROPÄISCHE PATENTANMELDUNG

(11) **EP 1 130 223 A1**
(43) Veröffentlichungstag der Anmeldung: **05.09.2001**
(21) Anmeldenummer: 00121913.8
(22) Anmeldetag: 07.10.2000
(51) Int. Cl.: F01M 11/03

(54) **Flüssigkeitsfilter, insbesondere Ölfilter für eine Brennkraftmaschine**

(30) Priorität: 14.12.1999 DE 19960203
(71) Anmelder: FILTERWERK MANN & HUMMEL GMBH, 71638 Ludwigsburg (DE)
(72) Erfinder: Jainek, Herbert, 74074 Heilbronn (DE)
(74) Vertreter: Voth, Gerhard, Dipl.-Ing.

(57) **Zusammenfassung**

Es wird ein Flüssigkeitsfilter, insbesondere ein als Leitungsfilter ausgebildeter Ölfilter für das Schmieröl einer Brennkraftmaschine vorgeschlagen. Dieses Filter besitzt ein erstes Ventil 16, welches z. B. im Einlaß 12 des Filters untergebracht sein kann. Erfindungsgemäß ist ein zweites Ventil 32 vorgesehen, welches über eine Verbindungsöffnung 31 direkt mit dem ersten Ventil kommuniziert. Dadurch wird eine Platz sparende integrierte Baugruppe, bestehend aus zwei Ventilen geschaffen, welche Vorteile hinsichtlich der Fertigung und der anfallenden Montagekosten bringt. Außerdem ist durch ein direktes Zusammenwirken der Ventile eine zuverlässige Funktion gegeben. Das erste Ventil kann z. B. ein Rücklaufsperrventil sein und das zweite Ventil ein Umgehungsventil.

## Beschreibung

Die Erfindung betrifft einen Flüssigkeitsfilter, insbesondere einen Ölfilter für das Schmieröl einer Brennkraftmaschine, welcher Anschlüsse für die zu filternde Flüssigkeit aufweist, wobei in einem der Anschlüsse ein Ventil untergebracht ist, nach der Gattung des Patentanspruches 1.

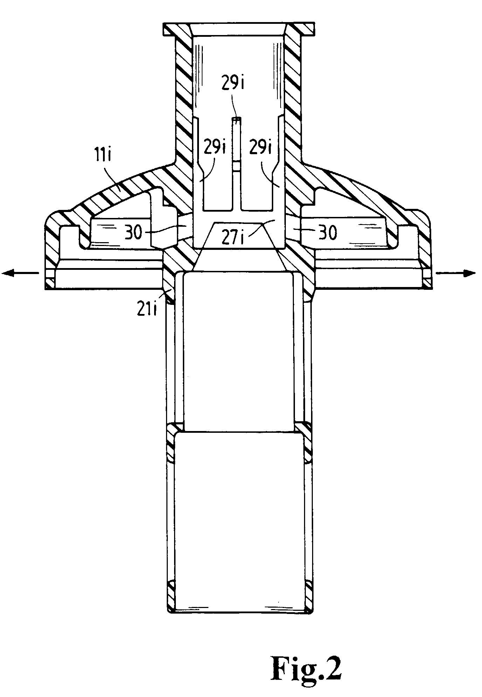

Ein solcher Filter ist z. B. aus der EP 701 059 A2 bekannt. Wie z. B. der Figur 2 dieses Dokumentes zu entnehmen ist, handelt es sich bei dem vorgeschlagenen Flüssigkeitsfilter um einen Leitungsfilter, der Schlauchanschlüsse für die Leitungen aufweist. Es ist ein Schlauchanschluß 5 vorgesehen, der mit einem Druckregelventil 4 versehen ist. Die an den Schlauchanschluß 5 angeschlossene Leitung wird also erst mit Flüssigkeit versorgt, wenn der in der Reinseite des Filterelementes anliegende Druck ausreicht, um das Druckregelventil 4 zu öffnen.

Bei dem gezeigten Filter handelt es sich um einen Wegwerffilter. Das Ventil besteht aus mehreren Teilen wie Ventilträger, Ventilplatten und Feder, die alle bei der Montage des Filters mit dem Filtergehäuse verbunden werden müssen. Hierdurch entsteht zusätzlicher Montageaufwand. Außerdem läßt sich diese Lösung schwer an ein Wechselfilter anpassen, da bei einem Wechsel des Filterelementes immer die Gefahr bestehen würde, daß das Druckregelventil in seine Einzelteile zerfällt.

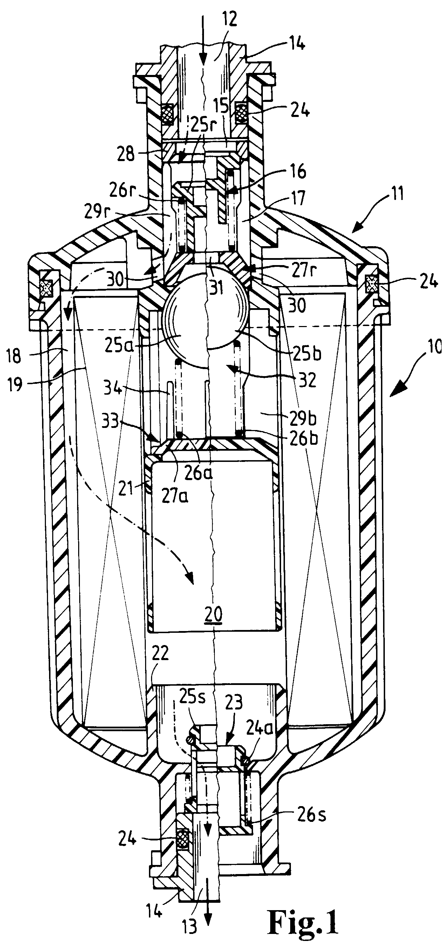

Gemäß der DE 299 08 533 U1 wird, wie in Figur 1 gezeigt, ein Ventil beschrieben, welches sich als separate Baueinheit in einer Aufnahmeöffnung einschieben läßt. Diese Aufnahmeöffnung kann z. B. der Anschluß eines Filtergehäuses sein. Der Einbau des Ventilmoduls in den Einlaß stellt eine kostengünstige Lösung dar, da das Ventil vormontiert werden kann. Außerdem kann das gezeigte Ventil auch bei Wechselfiltern verwendet werden, da ein Wechsel der entsprechenden Filtermittel unabhängig von der Baugruppe des Ventils erfolgen kann.

Das gezeigte Ventil läßt sich z. B. als Rücklaufsperrventil verwenden. In dieser Funktion wird es in den Einlaß eines Filters eingebaut, und verhindert dadurch einen Rücklauf an zu filternder Flüssigkeit z. B. außerhalb der Betriebszeit oder bei der Wartung. Es gibt jedoch auch weitere Anwendungsfälle für Ventile bei Flüssigkeitsfiltern. Der Anwendungsfall eines Druckregelventils ist bereits beschrieben worden. Ein Druckregelventil läßt sich insbesondere auch als Umgehungsventil ausführen, welches bei einem zu starken Druckabfall am Filterelement (z. B. durch Verschmutzung) öffnet, und so einen minimal Flüssigkeitsdurchsatz des Filters garantiert. Weiterhin werden Ablaufventile vorgesehen, die bei einem Auswechseln des Filterelementes öffnen und so einen Ablauf der im Filtergehäuse befindlichen Flüssigkeit gewährleisten. Bei Verwendung von Leitungsfiltern können jedoch auch Wartungsventile zum Einsatz kommen, die bei Abkoppeln der Leitungsabschnitte vom Leitungsfilter schließen und so ein Auslaufen des Filters verhindern.

Die Verwirklichung der verschiedenen Ventilmechanismen kann einzeln oder in Gruppen für einen Filter sinnvoll sein. Dabei ist ein Einbau in die Anschlüsse aus genannten Gründen besonders vorteilhaft. Bei der Realisierung mehrere Ventilmechanismen können diese jedoch nicht vollständig in die Anschlüsse eingebaut werden. Hierbei ergibt sich ein Platzproblem. Außerdem können die Ventilfunktionen nicht alle in einem Anschluß verwirklicht werden, da nur eine Reihenschaltung möglich wäre. Durch Anordnen zusätzlicher Ventile am Flüssigkeitsfilter entstehen also erhöhte Kosten und ein zusätzlicher Bauraumbedarf.

Aufgabe der Erfindung ist es daher einen Flüssigkeitsfilter zu schaffen, in dem mehrere Ventilmechanismen kostengünstig und Platz sparend angeordnet werden können. Diese Aufgabe wird durch die Merkmale des Patentanspruches 1 gelöst.

### Vorteile der Erfindung

Der erfindungsgemäße Filter weist in bekannter Weise Anschlüsse für die Leitungen, die die zu filternde Flüssigkeit fördern auf. In einem der Anschlüsse ist ein erstes Ventil angeordnet. Die Erfindung ist dadurch gekennzeichnet, daß das erste Ventil neben einem Zulauf und Ablauf für die durchfließende Flüssigkeit weiterhin eine Verbindungsöffnung aufweist, die mit einem zweiten Ventil kommuniziert.

Eine solche Ventilanordnung kann sowohl für Wegwerf- wie auch für Wechselfilter sinnvoll sein. Der sich ergebende Vorteil besteht darin, daß die Ventile auf engstem Bauraum angeordnet werden können, da sie direkt miteinander kommunizieren. Durch Vorsehen der Verbindungsöffnung kann die Funktion der beiden Ventile ganz oder teilweise entkoppelt werden, so daß diese ihre jeweilige Aufgabe zu erfüllen vermögen.

Das erste Ventil kann vorteilhaft ein Rücklaufsperrventil sein. Dieses benötigt den Zuund Ablauf zur Durchleitung der Flüssigkeit in den Filter hinein. Ein Zurückströmen wird durch Schließen des Ventils verhindert. Dieses Ventil kann gleichzeitig die Funktion eines Wartungsventils übernehmen, da bei Ausbau des Filters aus dem Anschluß kein Öl herauslaufen kann.

Die Verbindungsöffnung kann vorteilhaft mit einem Umgehungsventil kommunizieren. Bei geöffnetem Rücklaufsperrventil ist die Filterfunktion gegeben. Falls der Filter jedoch z. B. durch Verschmutzung einen zu hohen Druckabfall bewirkt kann das Umgehungsventil zusätzlich öffnen, so daß Flüssigkeit sowohl durch den Ablauf des Rücklaufsperrventils als auch durch die Verbindungsöffnung und das Umgehungsventil strömt.

Durch die direkten Verbindungswege ist die beschriebene Ventilkombination besonders zuverlässig in der Funktion. Bei der Realisierung von Zulauf und Ablauf des ersten Ventils sowie der Verbindungsöffnung können gleichzeitig Teile des Gehäuses mitgenutzt werden.

Gemäß einer weiteren Ausgestaltung der Erfindung ist der Flüssigkeitsfilter ein Leitungsfilter. Hierbei ergeben sich die bereits genannten Vorteile bei der Verwendung eines Rücklaufsperrventils, welches gleichzeitig als Wartungsventil genutzt werden kann. Leitungsfilter sind sehr universell in der Anwendung, da sie überall in ein Leitungssystem integriert werden können. Außerdem lassen sich Leitungsfilter leichter standardisieren, da ihre Anschlüsse nicht von den speziellen Gegebenheiten des Einbauortes abhängig sind, wie dies z. B. bei Anschraubfiltern der Fall ist.

Gemäß einer weiteren Ausbildung der Erfindung kann im Auslaß des Filters ein Schiebeventil angeordnet sein, welches als Wartungsventil wirkt. Diese Anwendung ist nur bei einem Leitungsfilter sinnvoll. Das Schiebeventil wird durch die Kupplung betätigt, welche zum an den Leitungsfilter angeschlossenen Leitungssystem gehört. Wird die Kupplung in den Auslaß gesteckt, öffnet das Schiebeventil, so daß eine einwandfreie Funktion des Filters möglich ist. Sobald die Kupplung zum Ausbau des Leitungsfilters aus dem Auslaß herausgezogen wird, schließt das Schiebeventil und verhindert damit ein Auslaufen des Leitungsfilters.

Eine besonders günstige Ausführungsform des ersten Ventiles ergibt sich, wenn dieses zur Montage in die Öffnung des Anschlusses eingeschoben und fixiert werden kann. Die Fixierung kann z. B. durch einen Klemmring am Ventilkörper oder durch einen Absatz erfolgen, welcher Übermaß im Verhältnis zur Einbauöffnung aufweist. Dabei ist es gleichermaßen denkbar, daß das erste Ventil ein Modul ist, welches als ganzes in den Anschluß eingeschoben wird, oder daß das Ventil in Einzelteilen montiert wird. Im letzten Fall ergibt sich eine Vereinfachung der Montage daraus, daß der Anschluß als Einbauöffnung gleichzeitig eine Führung der losen Ventilteile darstellt, so daß diese leicht ineinander gesteckt werden können.

Ist der Flüssigkeitsfilter mit einer Rundfilterpatrone ausgestattet, in der sich ein Mittelrohr befindet, so ergibt sich eine besonders vorteilhafte Ausführungsform der Erfindung dadurch, daß das zweite Ventil im Mittelrohr montiert wird, wobei eine Kommunikation mit der Verbindungsöffnung des ersten Ventils möglich sein muß. Hierdurch wird die Reinseite des Filters als Einbauraum für das zweite Ventil genutzt, wodurch kein zusätzlicher Bauraum verschwendet wird. Das zweite Ventil kann insbesondere ein Umgehungsventil sein. Das Mittelrohr stellt gleichzeitig gute Anbindungsmöglichkeiten für die Einzelteile des zweiten Ventils zur Verfügung. Diese kann z. B. von der dem Anschluß mit dem ersten Ventil gegenüberliegenden Stirnseite des Mittelrohrs eingeschoben werden. Hierbei läßt sich eine Fixierung der Ventilteile z. B. durch einen Bajonettverschluß realisieren.

Es ist besonders vorteilhaft, das Mittelrohr mit dem Gehäuse zu verbinden. Die Verbindung muß derart erfolgen, daß das Mittelrohr an den Anschluß angrenzt, in dem das erste Ventil eingebaut ist. Hierdurch wird ein zuverlässiges Zusammenwirken des ersten und zweiten Ventils gewährleistet. Auch bei einem Wechsel des Filterelements bleibt die Baugruppe der beiden Ventile unverändert, wodurch Fehler bei der Wartung ausgeschlossen werden können. Die Filterpatrone wird einfach nach Öffnen des Gehäuses vom Mittelrohr gezogen und durch eine neue ersetzt.

Es ist weiterhin vorteilhaft, das Mittelrohr einteilig mit dem Deckel des Gehäuses herzustellen. In diesem Zusammenhang wird der Deckel als Teil des Gehäuses aufgefaßt. Alternativ läßt sich das Mittelrohr auch in das Gehäuse, insbesondere den Deckel einschrauben. Durch die einteilige Herstellung entfallen jedoch Montageschritte, die die Lösung wirtschaftlicher machen.

Die Ventilkombination kann beispielsweise von beiden Seiten, also das erste Ventil durch die Öffnung des Anschlusses und das zweite Ventil durch die offene Seite des Mittelrohrs eingebaut werden. Ein besonders günstige Ausführungsform ergibt sich jedoch, wenn auch das zweite Ventil durch die Öffnung des Anschlusses einbaubar ist. Hierdurch können weitere Einzelteile der Ventilbaugruppen eingespart werden. Die beiden Ventile werden nacheinander in die Öffnung des Anschlusses hineingeschoben, wobei durch Vorsehen entsprechender Absätze die geometrischen Randbedingungen für die Funktion der Ventile gewährleistet werden. Zum Schluß werden die eingeschobenen Bauteile in der bereits beschriebenen Weise im Anschluß fixiert.

Diese und weitere Merkmale von bevorzugten Weiterbildungen der Erfindung gehen au-βer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand eines schematischem Ausführungsbeispieles beschrieben. Hierbei zeigt die Figur 1 einen Leitungsfilter der erfindungsgemäßen Ventilkombination im Schnitt, wobei das Umgehungsventil in zwei Varianten dargestellt ist, und die Figur 2 eine Version des Deckels mit integriertem Mittelrohr.

### Beschreibung der Ausführungsbeispiele

Der dargestellte Leitungsfilter in Figur 1 weist ein Gehäuse 10 mit einem Deckel 11 auf. Es ist ein Einlaß 12 und ein Auslaß 13 vorgesehen, die über Kupplungen 14 mit dem Leitungssystem verbunden werden können, welches das zu filternde Fluid führt. Die Kupplungen können z. B. an nicht dargestellte Schläuche montiert sein. Die Flüssigkeit strömt vom Einlaß 12 zu einem Zulauf 15 eines Rücklaufsperrventils 16 und, wenn dieses geöffnet ist, zu einem Ablauf 17. Der Ablauf des Rücklaufsperrventils 16 ist mit einer Rohseite 18 des Filters verbunden. Die Rohseite wird von einem Filterelement 19 von einer Reinseite 20 getrennt. Das Filterelement 19 ist dichtend auf ein Mittelrohr 21 und einen Stutzen 22 im Gehäuse geschoben. Daher muß das Fluid das Filterelement durchströmen, um von der Rohseite auf die Reinseite zu gelangen. Die Reinseite ist über ein Schiebeventil 23, welches durch die Kupplung offengehalten wird, mit dem Auslaß verbunden. Die Pfeile deuten die Flußrichtung der Flüssigkeit im Filter an.

Zur Abdichtung des Filtersystems und der Anschlüsse sind verschiedene Dichtungen 24 vorgesehen. Eine Dichtung 24a weist auch das Schiebeventil auf, wobei diese Dichtung gleichzeitig als Arretierung für einen Ventilkörper 25s dient und den Ventilsitz bildet. Das Schiebeventil ist sowohl in geöffnetem Zustand mit eingeschobener Kupplung 14 (links) als auch im geschlossenen Zustand (rechts / bei Ausbau des Leitungsfilters) dargestellt. Der Verschluß des Schiebeventils erfolgt über eine Feder 26s.

Das Rücklaufsperrventil 16 besteht aus einem Ventilträger 27r, einem Ventilkörper 25r einer Feder 26r und einem Klemmring 28. Die Komponenten des Rücklaufsperrventils werden nacheinander in den Einlaß 12 hineingeschoben und durch den Klemmring 28 fixiert. Der Klemmring bildet zusammen mit dem Ventilkörper 25r den Ventilsitz. Die Feder 26r drückt den Ventilkörper gegen den Ventilsitz, sofern kein Gegendruck durch die strömende Flüssigkeit erzeugt wird. Der Ventilträger 27r weist Führungsrippen 29r auf, die eine einwandfreie Axialbewegung des Ventilkörpers 25r gewährleisten und gleichzeitig den Flüssigkeitsfluß auf die Rohseite 18 des Filters ermöglichen. Dabei passiert die Flüssigkeit Öffnungen 30 im Mittelrohr 21. Das Rücklaufsperrventil (16) ist zur Hälfte (links) im geöffneten und zur anderen Hälfte im geschlossenen Zustand (rechts) dargestellt.

Weiterhin weist der Ventilträger 27r eine Verbindungsöffnung 31 auf, welche mit einem Ventilkörper 25a, b eines Umgehungsventils 32 kommuniziert. Das Umgehungsventil 32 ist in zwei Versionen a und b dargestellt. In der Version a (links) wird der Ventilkörper 25a und die Feder 26a von unten in das Mittelrohr 21 eingeschoben. Ein Ventilträger 27a wird in einem in das Mittelrohr integrierten Bajonettverschluß 33 verrastet, wodurch das Ventil fixiert wird. Der Ventilkörper 25a weist einen Ventilsitz im Mittelrohr auf. Im Ventilträger 27a sind Führungsstifte 34 für die Feder 26a vorgesehen.

In der Version b (rechts) wird eine Feder 26b und ein Ventilkörper 25b durch die Einbauöffnung des Einlasses 12 geschoben. Das Mittelrohr besitzt für diese Bauteile eine integrierte Aufnahme, die durch Führungsrippen 29b gebildet wird. Nach Einschieben der Bauteile des Umgehungsventils 32 folgen die Bauteile des Rücklaufsperrventils 16, welches in der bereits beschriebenen Weise montiert wird. Dadurch wird die gesamte Ventilkombination zu einer Baugruppe zusammengefaßt. Der Ventilsitz für den Ventilkörper 25b ergibt sich durch Kommunikation mit dem Ventilträger 27r des Rücklaufsperrventils.

In Figur 2 ist eine Variante des Deckels 11i als Integralbauteil im Schnitt dargestellt. Diese eignet sich für das Umgehungsventil mit dem Ventilkörper 25a, das von unten in das Mittelrohr eingebaut wird. Neben dem Mittelrohr 21i, ist der Ventilträger 27i und die Führungsrippen 29i in den Deckel 11i integriert. Anstelle der Verbindungsöffnung 31 ist eine rippenförmige Ausbildung des Ventilträgers 27i vorgesehen, so daß eine Kommunikation zwischen Rücklaufsperrventil 16 und Umgehungsventil 32 möglich ist.

## Patentansprüche

1. Flüssigkeitsfilter, insbesondere Ölfilter für das Schmieröl einer Brennkraftmaschine, mit einem eine Rohseite (18) des Filters von einer Reinseite (20) desselben trennenden Filterelement (19), welches in ein Gehäuse (10) mit Anschlüsse eingebaut ist von denen einer als Einlaß (12) auf der Rohseite (18) und einer als Auslaß (13) auf der Reinseite (20) des Flüssigkeitsfilters ausgeführt ist, wobei in einem der Anschlüsse ein erstes Ventil mit einem Zulauf (15) und einem Ablauf (17) angeordnet ist, dadurch gekennzeichnet, dass das erste Ventil über eine Verbindungsöffnung (31) mit einem zweiten Ventil kommuniziert, wobei beide Ventile auf einer Achse angeordnet sind.

2. Flüssigkeitsfilter nach Anspruch 1, dadurch gekennzeichnet, dass das erste Ventil ein Rücklaufsperrventil (16) ist.

3. Flüssigkeitsfilter nach einem der vorherigen Ansprüche, dadurch gekennzeichnet, dass das zweite Ventil eine Umgehungsventil (32) ist.

4. Flüssigkeitsfilter nach einem der vorherigen Ansprüche, dadurch gekennzeichnet, dass dieser als Leitungsfilter ausgeführt ist.

5. Flüssigkeitsfilter nach Anspruch 4, dadurch gekennzeichnet, dass im Auslaß (13) ein Schiebeventil (23) als Wartungsventil angeordnet ist, welches durch eine mit dem Auslaß verbundene Kupplung (14) des Leitungssystems zur Förderung der gefilterten Flüssigkeit geöffnet werden kann.

6. Flüssigkeitsfilter nach einem der vorherigen Ansprüche, dadurch gekennzeichnet, dass das erste Ventil in die Öffnung des Anschlusses eingeschoben und fixiert ist.

7. Flüssigkeitsfilter nach einem der vorherigen Ansprüche, wobei das Filterelement (19) eine Rundfilterpatrone ist, in der sich ein Mittelrohr (21) befindet, dadurch gekennzeichnet, dass das zweite Ventil derart im Mittelrohr montiert ist, dass es mit dem ersten Ventil kommuniziert.

8. Flüssigkeitsfilter nach Anspruch 7, dadurch gekennzeichnet, dass das Mittelrohr (21) mit dem Gehäuse (10) derart verbunden ist, dass es mit demjenigen Anschluss kommuniziert, in den das erste Ventil eingebaut ist.

9. Flüssigkeitsfilter nach Anspruch 8, dadurch gekennzeichnet, dass das Mittelrohr (21) einteilig mit einem Deckel (11) des Gehäuses (10) hergestellt ist.

10. Flüssigkeitsfilter nach einem der vorherigen Ansprüche, dadurch gekennzeichnet, dass das zweite Ventil zum Einbau durch die Öffnung desjenigen Anschlusses eingeschoben ist, in dem auch das erste Ventil angeordnet ist.
